# EUROPEAN PATENT SPECIFICATION

(11) **EP 0 428 092 B1**
(45) Date of publication and mention of the grant of the patent: **29.03.1995**
(21) Application number: 90121587.1
(22) Date of filing: 12.11.1990
(51) Int. Cl.: G21C 3/32

(54) **Fuel assembly for a boiling nuclear reactor**
Kernbrennstoffbündel für einen Siedewasserreaktor
Assemblage combustible pour réacteur nucléaire à eau bouillante

(30) Priority: 14.11.1989 SE 8903818
(43) Date of publication of application: 22.05.1991
(73) Proprietor: ABB ATOM AB, S-721 83 Västeras (SE)
(72) Inventor: Nylund, Olov, S-720 17 Västeras (SE)
(74) Representative: Boecker, Joachim, Dr.-Ing.

(56) References cited:
- US-A- 4 749 543
- US-A- 4 749 544

## Description

The invention relates to a fuel assembly for a boiling nuclear reactor according to the precharacterising part of claim 1. Such a fuel assembly is known from the EP-A-260 061.
In such a fuel assembly a coolant, for example water, is adapted to flow from below upwards through the fuel assembly, which normally is arranged vertically , to cool, upon a nuclear reaction, the fuel rods arranged in the fuel assembly.

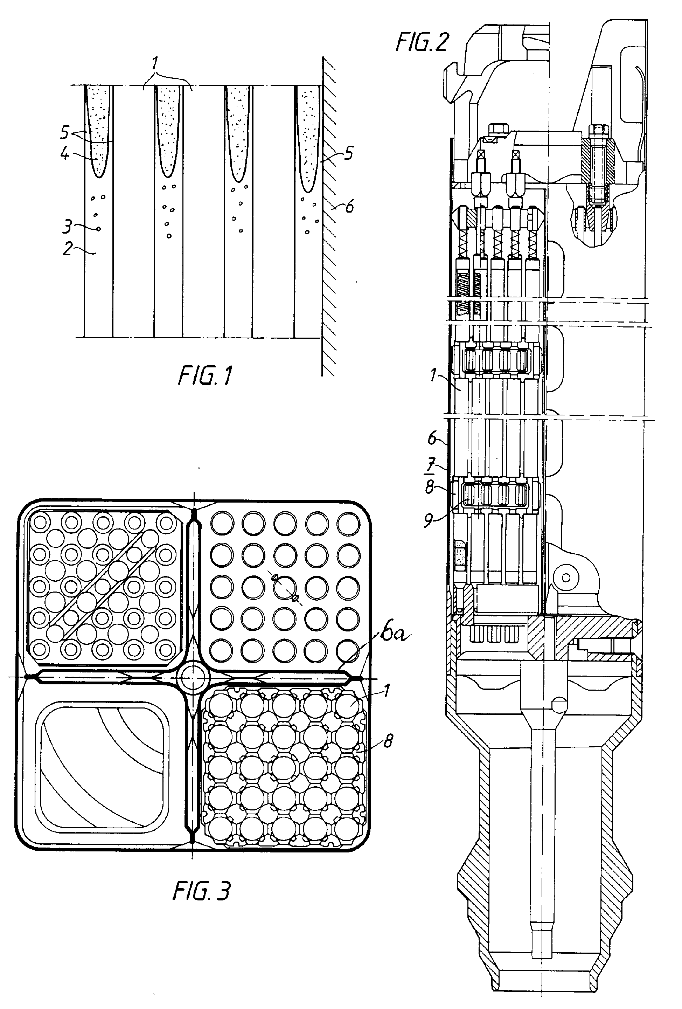

In a boiling type nuclear reactor the steam formation in the fuel assembly increases more and more towards the upper part of the fuel assembly. This is clear from Figure 1 which shows, in rough outline, part of a vertical cross section of a conventional fuel assembly. In Figure 1, numeral 1 designates fuel rods and numeral 2 the spaces between the rods.

These spaces 2 are in the lower part of the fuel assembly, which correspond to the lower part of the reactor, filled with coolant, in the present case water. Further up in the fuel assembly, steam bubbles 3 are formed in the water which, still further up in the region 4, are transformed into water steam. As long as so-called dry out does not take place, however, there is always a film 5 of the cooling water on the fuel rods. It is important that this film 5 is maintained at all points of the rods 1. If at some point it disappears by dry out, serious damage at this point of the fuel rod 1 will rapidly occur.

The wall 6 of the fuel assembly is also normally coated with a water film 5. However, this film 5 is not entirely necessary since the wall 6 of the fuel assembly is considerably more insensitive to superheating than the fuel rods. This fact has been observed and attempts have been made to utilize it in some known designs, as, for example, in US-A-4,749,543, column 8 and figure 9. In these designs, the cooling water flowing along the wall 6 of the fuel assembly is diverted towards the centre of the bundle by means of elevations on the wall 6 or recesses in the same. Also fins on the downstream side of the spacers are used to achieve a diversion or deflection of the cooling water. All these embodiments have certain drawbacks. Thus, for example, the elevations increase the pressure drop in the cooling water and thus reduce the cooling effect whereas recesses in the wall entail certain difficulties from the point of view of manufacturing technique. Further, a deflection of the cooling water flowing along the fuel assembly wall 6 should take place as early as possible in relation to each separate spacer, but preferably not immediately after the spacer viewed in the direction of flow. This is due to the fact that dry outs normally occur immediately upstream of a spacer or possibly in the same.

The EP-A-260 061 describes a fuel assembly where the outer peripheral strap of the spacers is provided with scoops on the upstream side of the spacer. The supporting portions of the scoops extend downwards lying in the same plane as the peripheral spacer strap. The scoops are then bent inwardly towards the centre of the spacer. These scoops deflect part of the water, which would otherwise flow inside the spacer near the outer peripheral strap thereof, to the centre of the spacer.

The invention aims at developing a fuel assembly for a boiling nuclear reactor of the above-mentioned kind which enables, in a known spacer, the described deflection of the coolant in a simple manner.

To achieve this aim the invention suggests a fuel assembly for a boiling nuclear reactor according to the introductory part of claim 1, which is characterized by the features of the characterizing part of claim 1.

Further developments of the invention are characterized by the features of the additional claims.

According to the invention the spacer, which consists of a number of cells surrounded by an outer frame formed from a metal band placed on edge, is provided with a skirt. This skirt extends said metal band in the upstream direction of the flowing coolant. Openings have been arranged in the skirt and in some of these openings deflection fins have been provided in order to deflect the coolant, flowing along the assembly wall, in a direction towards the centre of each respective spacer.

By means of the invention improved cooling is obtained immediately below the respective spacer where dry out normally occurs. The extension or skirt may be made as part of the ordinary spacer frame or as a separate part 7 connectable thereto. In the latter case the skirt may be made of Zircaloy for achieving reduced neutron absorption.

By way of example, the invention will now be described in greater detail with reference to the accompanying drawings showing in
- Figure 1: part of a vertical cross section of a conventional fuel assembly to demonstrate the above-explained phenomenon dealt with by the invention,
- Figure 2: a fuel assembly for four separate bundles of fuel rods in vertical cross section,
- Figure 3: a horizontal cross section through the assembly shown in Figure 2,
- Figure 4: schematically one of the spacers, shown in Figure 2, seen from the side but provided with a skirt according to the invention,
- Figure 5 and 6: sections taken along line A-A and B-B, respectively, in Figure 4
- Figures 7-9: a second embodiment of a spacer with a detachable skirt.

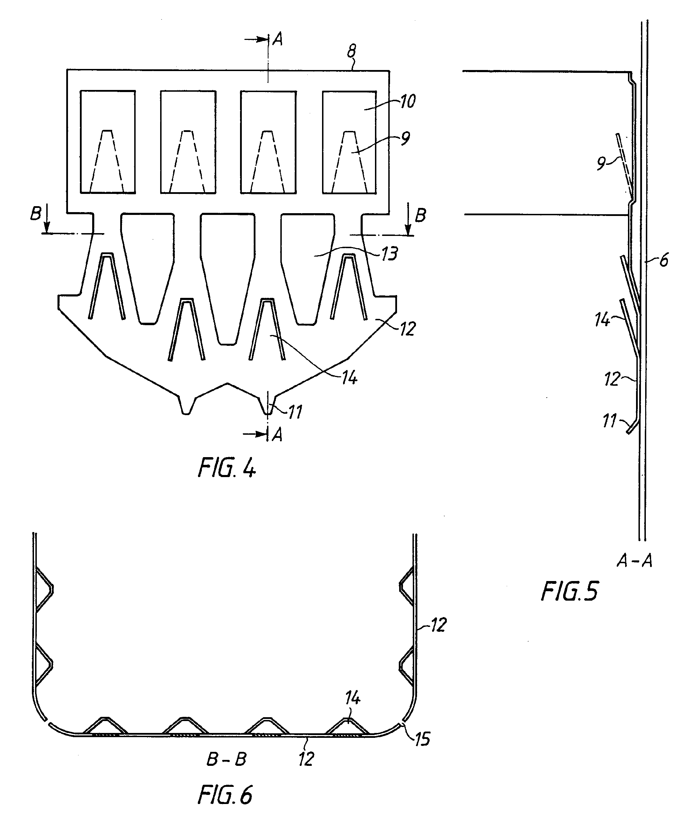

Figure 2 shows a fuel assembly 7 in the form of an elongated multi-corner channel with a wall 6. The fuel assembly is divided by inner walls 6a into four sub-channels, each sub-channel accommodating a sub-bundle of fuel rods. Each sub-channel of the fuel assembly 7 accommodates spacers 8 of a known type. The spacers 8 are here provided with windows 10 (Figure 4) but may also be without such windows. In Figure 3 one of the fuel rod sub-bundles is provided with one of the same spacers 8 seen from above. The same arrangement may, of course, be used where the fuel assembly 7 only comprises, for example, one single bundle and thus is not divided into four sections as the fuel assembly shown in Figures 2 and 3.

Figure 4 schematically shows a spacer 8 provided with a skirt 12 which extends the frame of the spacer 8 in a direction opposite to the direction of the coolant flow. The skirt 12 is provided with windows 13 to reduce the amount of material and with deflection fins 14. If the spacer 8 is provided with windows 10, deflection fins 9 may also be arranged in these windows. Figures 5 and 6 show sections of Figure 4. From Figure 6 it is clear that the side pieces of the skirt may be divided at 15 and may be made resilient so that, when the fuel rod bundle is inserted into the fuel assembly 7, the side pieces of the skirt make good contact with the assembly wall 6, thus obtaining centering of the spacer 8. The invention functions in such a way that the lower edge of the skirt 12 scrapes cooling water from the assembly wall 6 and, if present, from the inner walls 6a and its fins contribute to increased turbulence and diversion of the cooling water towards the centre of the spacer 8. The lower edge of the skirt 12 is provided with guide studs 11 to facilitate the insertion of the fuel rod bundle into the fuel assembly. For the same reason, in addition, the lower edge has been given a convex configuration.

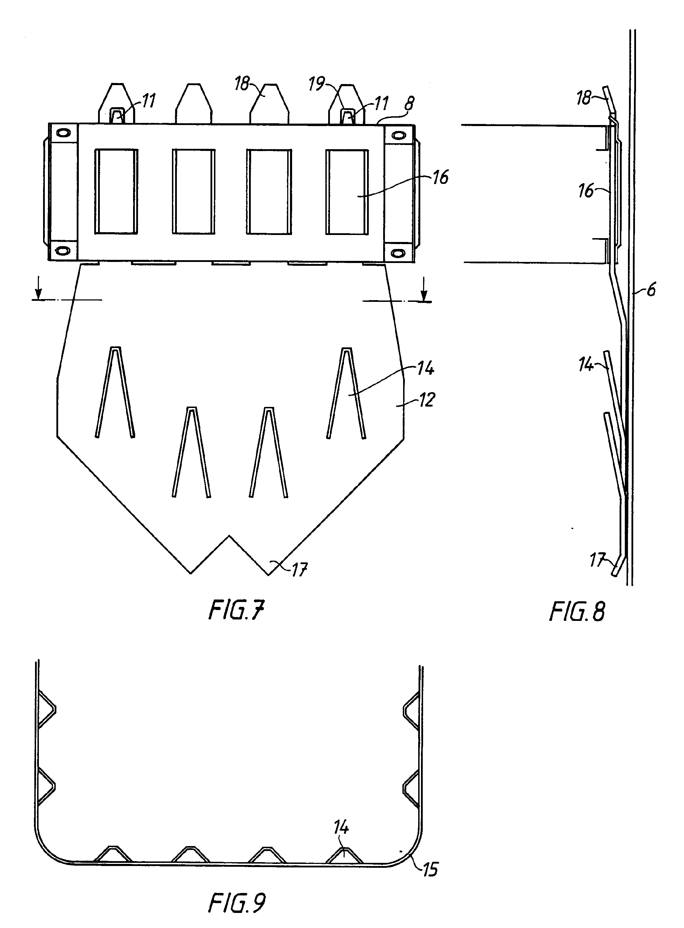

Figures 7-9 show a similar embodiment but with the skirt 12 being detachable. As with the embodiment described above, the skirt 12 is provided with deflection fins 14. At its top, the skirt 12 has a number of tape-formed insertion members 16 which may be inserted into the spacer 8 for fixing the skirt 12 to the frame of the spacer 8. At the top 18 the insertion members 16 are bent inwards to facilitate guiding the bundle in the surrounding channel of the fuel assembly 7. At the guide studs 11 the insertion members 16 have been provided with holes 19 to lock the members 16 and hence the skirt 12 in the spacer 8. The lower edge of the skirt 12 has also been designed arrow-shaped to facilitate the insertion of the bundle into the surrounding channel. For this purpose also the tips 17 are bent inwardly. The skirt 12 may be designed in separate pieces - one for each side with openings at 15 and resilient towards the wall of the fuel assembly.

Another possibility is that the skirt is designed as an undivided closed sleeve in both of the above-mentioned embodiments. A certain distance between the channel wall and the skirt 12 must then be maintained. This results in a somewhat less efficient device from the point of view of cooling. On the other hand, the risk of vibrations is then reduced.

The design with a detachable skirt means that the skirt may be made of a material different from that of the spacer 8 itself, which may be an advantage. The skirt 12 may, for example, be made of Zircaloy, which has a lower neutron absorption than Inconel, from which the spacer 8 is normally made and which has a higher neutron absorption.

## Claims

1. Fuel assembly for a boiling nuclear reactor in the form of at least one elongated channel having several walls, which channel is connected to a coolant intended to traverse the channel, with a bundle of similarly elongated fuel rods (1) arranged in the channel and retained by a plurality of spacers (8) spaced along the bundle and comprising a number of cells surrounded by an outer frame which is formed as a band standing on edge, and with means extending from the lower edge of at least one spacer to divert coolant from the outer to the inner area of the channel, **characterized** in that said band on the upstream side of the at least one spacer is extended by a skirt (12) whose lower edge is adapted to scrape off the coolant flowing along the channel wall and deflect it in a direction towards the centre of the respective spacer.

2. Fuel assembly according to claim 1, **characterized** in that openings (13) are arranged in the skirt (12).

3. Fuel assembly according to claim 2, **characterized** in that deflection fins (14) are arranged in all or some of the openings (13).

4. Fuel assembly according to any of the preceding claims, **characterized** in that the skirt (12) is arranged open in the corners (15) of said elongated channel and makes contact in a resilient manner with the channel wall.

5. Fuel assembly according to any of the preceding claims, **characterized** in that the spacer frame is provided with windows (10), in which deflection fins (9) are arranged in order to strengthen the deflecting effect of the skirt (12) and the fins (14) provided therein.

6. Fuel assembly according to any of the preceding claims, **characterized** in that on each side of the skirt (12), corresponding to one side of the multi-corner channel, the edge facing against the direction of flow has a substantially arrow- or convex-like shape.

7. Fuel assembly according to any of the preceding claims, **characterized** in that each side piece of the skirt (12) is made in a separate piece and is provided on its downstream side with members (16) for connecting it to the frame of the spacer (8).

8. Fuel assembly according to claim 7, **characterized** in that the skirt (12) is made of Zircaloy.

9. Fuel assembly according to any of claims 7 or 8, **characterized** in that the side pieces of the skirt (12) are connected to each other at the corners (15) so that the skirt (12) forms a sleeve.

## Patentansprüche

1. Brennelement für einen Siedekernreaktor in Gestalt mindestens eines langgestreckten Kastens, der mehrere Wände hat und an ein Kühlmittel angeschlossen ist, welches den Kasten zu durchströmen bestimmt ist, mit einem Bündel ähnlich langgestreckter Brennstäbe (1), die in dem Kasten angeordnet und durch eine Vielzahl von Abstandshaltern (8) zusammengehalten werden, welche längs des Bündels mit Abstand voneinander angeordnet sind und ein Vielzahl von Zellen enthalten, die von einem äußeren Rahmen umgeben sind, welcher aus einem hochkant stehenden Band gebildet wird, und mit einer sich vom unteren Rand mindestens eines Abstandshalters erstreckenden Vorrichtung zur Umlenkung von Kühlmittel aus dem äußeren in den inneren Bereich des Kastens, **dadurch gekennzeichnet**, daß das genannte Band des mindestens einen Abstandshalters an seiner stromaufwärts liegenden Seite durch eine Schürze (12) verlängert ist, deren unterer Rand in der Lage ist, das längs der Kastenwand strömende Kühlmittel abzuschaben und in Richtung zur Mitte des betreffenden Abstandshalters umzulenken.

2. Brennelement nach Anspruch 1, **dadurch gekennzeichnet**, daß in der Schürze (12) Löcher (13) vorhanden sind.

3. Brennelement nach Anspruch 2, **dadurch gekennzeichnet**, daß in einer oder mehreren der Löcher (13) Umlenkflossen (14) angeordnet sind.

4. Brennelement nach einem der vorhergehenden Ansprüche, **dadurch gekennzeichnet**, daß die Schürze (12) in den Ecken (15) des genannten langgestreckten Kastens offen ist und in elastischem Kontakt mit der Kastenwand steht.

5. Brennelement nach einem der vorhergehenden Ansprüche, **dadurch gekennzeichnet**, daß der Abstandshalterrahmen mit Fenster (10) versehen ist, in welchen Umlenkflossen (9) angeordnet sind, um die Umlenkwirkung der Schürze (12) und der an dieser angeordneten Flossen (14) zu verstärken.

6. Brennelement nach einem der vorhergehenden Ansprüche, **dadurch gekennzeichnet**, daß an jeder Seite der Schürze (12), die einer Seite des mehreckigen Kastens entspricht, der Rand, welcher gegen Strömungsrichtung weist, eine im wesentlichen pfeilförmige oder konvexartige Gestalt hat.

7. Brennelement nach einem der vorhergehenden Ansprüche, **dadurch gekennzeichnet**, daß jedes Seitenteil der Schürze (12) aus einem separaten Teil besteht und an seiner stromabwärts gelegenen Seite mit Gliedern (16) zu seiner Verbindung mit dem Rahmen des Abstandshalters (8) versehen ist.

8. Brennelement nach Anspruch 7, **dadurch gekennzeichnet**, daß die Schürze (12) aus Zircaloy besteht.

9. Brennelement nach einem der Ansprüche 7 oder 8, **dadurch gekennzeichnet**, daß die Seitenteile der Schürze (12) in den Ecken (15) derart miteinander verbundgen sind, daß die Schürze eine Hülse bildet.

## Revendications

1. Assemblage combustible d'un réacteur nucléaire à eau bouillante, ayant la forme d'au moins un canal oblongue à plusieurs parois, ce canal étant relié à un agent de refroidissement destiné à passer dans le canal, ayant un faisceau de crayons (1) à combustible de même longueur disposés dans le canal et maintenus par une pluralité de pièces d'entretoisement (8) à distance les unes des autres le long du faisceau et comprenant un certain nombre d'alvéoles entourés d'un cadre extérieur qui est formé d'une bande montée sur champ, et des moyens s'étendant à partir du bord inférieur d'au moins une pièce d'entretoisement destinés à dévier l'agent de refroidissement de la zone extérieure vers la zone intérieure du canal, caractérisé en ce que la bande sur le côté en amont de la au moins une pièce d'entretoisement est prolongée par une jupe (12) dont le bord inférieur est adapté pour racler le fluide s'écoulant le long de la paroi du canal et le dévier vers le centre de la pièce d'entretoisement correspondante.

2. Assemblage combustible selon la revendication 1, caractérisée en ce que sont ménagées dans la jupe (12) des ouvertures (13).

3. Assemblage combustible selon la revendication 2, caractérisé en ce que quelques ou toutes les ouvertures sont munies de nervures déflectrices (14).

4. Assemblage combustible selon la revendication 3, caractérisé en ce que la jupe (12) est ouverte aux coins (15) mentionnés ci-dessus et est en contact élastique avec la paroi du canal.

5. Assemblage combustible selon l'une quelconque des revendications précédentes, caractérisé en ce que le cadre des pièces d'entretoisement est muni de fenêtres (16), elles-même munies de nervures déflectrices (9) de manière à augmenter l'effet de déflection de la jupe (12) et des nervures déflectrices (14) qui y sont prévues.

6. Assemblage combustible selon l'une quelconque des revendications précédentes, caractérisé en ce que sur chaque côté de la jupe (12), correspondant à un côté du canal à coins multiples, le bord faisant face à la direction d'écoulement a une forme sensiblement en flèche ou convexe.

7. Assemblage combustible selon l'une quelconque des revendications précédentes, caractérisée en ce que chaque pièce latérale de la jupe (12) est faite d'une pièce à part et est munie sur son côté en aval d'éléments (16) destinés à la relier au cadre de la pièce d'entretoisement (8).

8. Assemblage combustible selon la revendication 7, caractérisé en ce que la jupe (12) est en zircaloy.

9. Assemblage combustible selon l'une quelconque des revendications 7 ou 8, caractérisé en ce que les pièces latérales de la jupe (12) sont reliées les unes aux autres aux coins (15) de façon que la jupe (12) forme un manchon.
